# EUROPÄISCHE PATENTSCHRIFT

(11) **EP 2 666 353 B1**
(45) Veröffentlichungstag und Bekanntmachung des Hinweises auf die Patenterteilung: **31.12.2014**
(21) Anmeldenummer: 13168205.6
(22) Anmeldetag: 17.05.2013
(51) Int. Cl.: A01G 23/099, B25D 7/00

(54) **Vorrichtung zum manuellen Rücken von Baumstämmen**
Device for manually moving tree trunks
Dispositif de déplacement manuel de troncs d'arbres

(30) Priorität: 24.05.2012 DE 102012010154
(43) Veröffentlichungstag der Anmeldung: 27.11.2013
(73) Patentinhaber: Hydrotec Technologies Aktiengesellschaft, 27793 Wildeshausen (DE)
(72) Erfinder: Krüger, Stephan, 26133 Oldenburg (DE)
(74) Vertreter: Jabbusch, Matthias

(56) Entgegenhaltungen:
- BE-A- 391 388
- CH-A- 238 956
- CH-A5- 648 370
- CN-Y- 201 248 232
- DE-C- 923 359
- DE-U1-202005 003 983
- US-A- 2 710 571
- US-A- 2 883 229

## Beschreibung

Die Erfindung betrifft eine Vorrichtung zum manuellen Rücken von Baumstämmen, mit einem Werkzeugschaft und wenigstens einem an einem Schaftende des Werkzeugschaftes gehaltenen Werkzeugkopf. Solche Vorrichtungen sind zB aus CH648370, BE391388 oder CN201248232Y bekannt.

Derartige Vorrichtungen werden als Sappie oder als Grießbeil bezeichnet und fungieren als manuell handhabbares Mehrzweckgerät, insbesondere als Rückenhilfe zum Rücken geernteten Holzes. Zu Zeiten der konventionellen Holzernte wurde der Werkzeugschaft aus Eschenholz oder anderen für die Herstellung von Werkzeugschäften geeigneten Holzarten gefertigt. Der geschmiedete Werkzeugkopf weist ein Auge auf, in dem der Werkzeugschaft mittels eines Keils verspannt ist. Zu Zeiten der industriellen Holzernte hat sich jedoch unter dem verstärkten Einsatz von Arbeitsmaschinen das Anforderungsprofil und damit auch das äußere Erscheinungsbild des Sappies verändert. So wird der Werkzeugschaft moderner Sappies insbesondere aus legierten Aluminiumhohlprofilen und der Werkzeugkopf aus gehärtetem Stahlblech gefertigt. Das veränderte Anforderungsprofil beinhaltet insbesondere einen maschinelle Arbeiten begleitenden oder unterstützenden Einsatz des Sappies. Dem veränderten Anforderungsprofil tragen die bekannten Sappies jedoch nicht in einem ausreichenden Maße Rechnung.

Der Erfindung liegt deshalb die Aufgabe zugrunde, eine Vorrichtung der eingangs genannten Gattung aufzuzeigen, mit der dem veränderten Anforderungsprofil auf besonders einfache Weise Rechnung getragen wird.

Diese Aufgabe ist erfindungsgemäß durch die Merkmale des Patentanspruches 1 gelöst. Vorteilhafte Weiterbildungen der Erfindung sind in den Unteransprüchen angegeben.

Die erfindungsgemäße Vorrichtung zeichnet sich dadurch aus, dass der Werkzeugkopf wenigstens zwei, in Längsrichtung des Werkzeugschaftes nebeneinander angeordnete Schleppzinken aufweist. Sind beide Schleppzinken in das Holz eines zu rückenden Baumstammes eingeschlagen, können neben den von Hand am Werkzeugschaft eingeleiteten Zugkräften auch Drehmomente auf den Baumstamm übertragen werden. Zugkräfte und Drehmomente dienen insbesondere dem Ausrichten und Positionieren des einer Maschine zuzuführenden Holzes, so dass das erfindungsgemäße Sappie für einen maschinelle Arbeiten begleitenden oder unterstützenden Einsatz besonders geeignet ist.

Erfindungsgemäss weist jede Schleppzinke eine krallenartig ausgeformte Zinkenspitze mit wenigstens einer auf ihrer Konkavseite ausgebildeten Zahnung auf. Diese erlaubt auch das Rücken von Schwachholz, das aufgrund seiner zu geringen Masse das Einschlagen der Zinkenspitzen schwierig oder gar unmöglich macht. Die Zahnung verhindert dabei das Abrutschen der zum Rücken hinter das Schwachholz greifenden Schleppzinken.

Nach einer Weiterbildung der Erfindung weisen die Schleppzinken zueinander gegensinnig ausgebildete Abkröpfungen auf, wobei die einander zugekehrten Kröpfschenkel aneinander anliegend und mit wenigstens einem der Schaftenden des Werkzeugschaftes verbunden sind. Zur Verbindung des Werkzeugschaftes mit dem Werkzeugkopf weisen seine Schleppzinken im Bereich ihrer aneinander anliegenden Kröpfschenkel Einspannhälse auf, die mit dem vorzugsweise aus einem legierten Aluminium- oder Stahlhohlprofil hergestellten Werkzeugschaft fest verbunden sind.

Um die Verbindung der Einspannhälse mit dem Werkzeugschaft vor schädlichen Hebelkräften zu schützen, die aus einer Spreizung der nebeneinander angeordneten Schleppzinken resultieren, wird vorgeschlagen, die Schleppzinken an ihren aneinander anliegenden Kröpfschenkeln über wenigstens eine starre Verbindung zusammenzuhalten. Die starre Verbindung ist beispielsweise durch eine Vernietung, Verschraubung oder eine Verschweißung hergestellt.

Nach einer nächsten Weiterbildung der Erfindung weist der Werkzeugschaft wenigstens einen die Schleppzinken basisseitig umschließenden Futterkörper auf. Der Futterkörper weist die Einspannhälse der Schleppzinken im Hohlprofil des Werkzeugschaftes formschlüssig aufnehmende Klemmbacken auf, die zusammen mit den Einspannhälsen der Schleppzinken und dem Werkzeugschaft eine Steckverbindung ausbilden, die mittels Vernietungen oder Verschraubungen gegen ein Auseinanderziehen gesichert ist. Der die Schleppzinken basisseitig umschließende Teil des Futterkörpers verbindet die Klemmbacken vorzugsweise einstückig miteinander, so dass eine besonders belastungsfähige und gleichwohl geschützt angeordnete Verbindung des Werkzeugschaftes mit dem Werkzeugkopf hergestellt ist.

Nach einer anderen Weiterbildung der Erfindung weist der Werkzeugschaft ein Griffteil mit wenigstens einem zwischen seiner Grifffläche und dem Werkzeugkopf ausgebildeten Fingerschutz auf. Der Fingerschutz verringert das Risiko von Verletzungen an den Fingern einer das Sappie am Griffteil ergreifenden Hand. Die griffinnenseitig an dem Fingerschutz ausgebildete Griffmulde weist einen Öffnungswinkel von wenigstens 75° auf, so dass eine mit dem erfindungsgemäßen Sappie arbeitende Person ihre Hand jederzeit gefahrlos aus der Griffmulde des Griffteiles zurückziehen kann.

Nach einer besonders vorteilhaften Weiterbildung der Erfindung ist der Werkzeugschaft als Schiebeführung für das Griffteil ausgebildet, wobei der Schiebeführung wenigstens ein Feststellmechanismus zugeordnet ist. Damit besteht die Möglichkeit der Einstellung unterschiedlicher Schaftlängen, so dass der Einsatzbereich des erfindungsgemäßen Sappies vorteilhaft vergrößert ist. Der Feststellmechanismus weist vorzugsweise eine Rastmechanik auf, die vorzugsweise über ein federbelastetes Betätigungsorgan entriegelbar ist.

Um den Werkzeugschaft unter Einhaltung ergonomisch komfortabler Schaftverläufe als Schiebeführung ausbilden zu können, ist vorgesehen, dass der Werkzeugschaft wenigstens zwei gerade Schaftabschnitte aufweist, und dass die geraden Schaftabschnitte über einen wenigstens einfach gekrümmten Schaftabschnitt miteinander verbunden sind. Grundsätzlich ist es jedoch ausreichend, lediglich den die Schiebeführung für das Griffteil ausbildenden Schaftabschnitt gerade auszubilden.

Um den Einsatzbereich des erfindungsgemäßen Sappies weiter zu vergrößern, weist der Werkzeugschaft vorzugsweise wenigstens ein an seinem das Griffteil tragenden Schaftende ein Anreißmesser auf, wobei dem Anreißmesser eine im Griffteil ausgebildete Messerscheide zugeordnet ist. In diesem Fall dient der als Schiebeführung ausgebildete Werkzeugschaft dem wahlweisen Ein- und Ausfahren des Anreißmessers aus seiner Messerscheide.

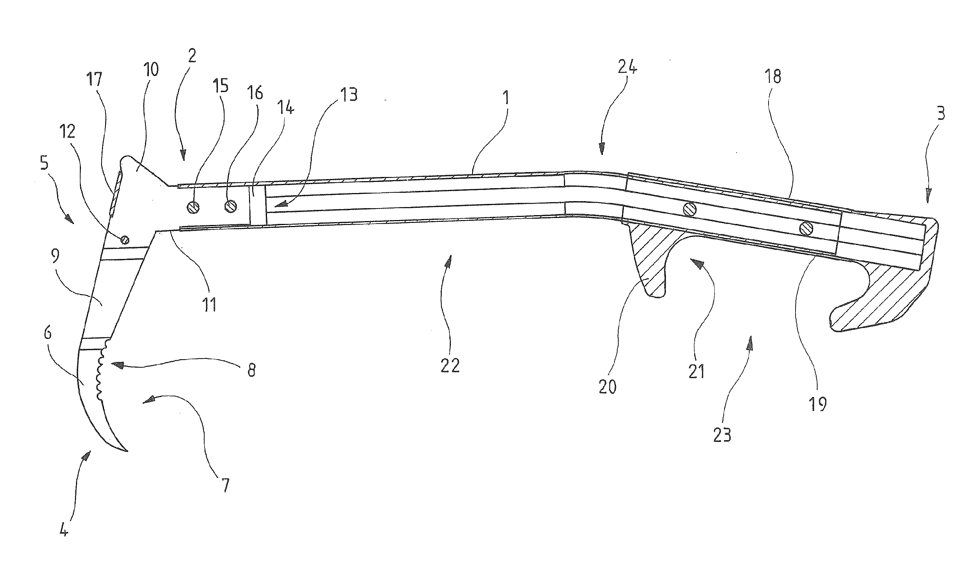

Ein Ausführungsbeispiel der Erfindung, aus dem sich weitere erfinderische Merkmale ergeben, ist in der Zeichnung dargestellt.

Die einzige Figur zeigt eine erfindungsgemäße Vorrichtung im Mittenschnitt. Zum manuellen Rücken von Baumstämmen weist die als Sappie ausgebildete erfindungsgemäße Vorrichtung einen Werkzeugschaft 1 sowie einen an einem der Schaftenden 2,3 des Werkzeugschaftes 1 gehaltenen Werkzeugkopf 4 auf. Der Werkzeugkopf 4 weist zwei, in Längsrichtung des Werkzeugschaftes 1 nebeneinander angeordnete Schleppzinken 5 auf, von denen in der Figur aufgrund des gewählten Mittenschnittes lediglich die für das Auge des Betrachters hinter der Schnittebene liegende Schleppzinke dargestellt ist. Jede Schleppzinke 5 weist eine krallenartig ausgeformte Zinkenspitze 6 mit einer auf ihrer Konkavseite 7 ausgebildeten Zahnung 8 auf. Die Schleppzinken 5 weisen zueinander gegensinnig ausgebildete Abkröpfungen 9 auf, wobei die Kröpfschenkel 10 im schraffiert dargestellten Bereich aneinander anliegen und mit dem Schaftende 2 des Werkzeugschaftes 1 verbunden sind. Zur Verbindung des Werkzeugschaftes 1 mit dem Werkzeugkopf 4 weisen die Schleppzinken 5 im Bereich ihrer aneinander anliegenden Kröpfschenkel 10 Einspannhälse 11 auf, die mit dem als Stahlhohlprofil ausgeführten Werkzeugschaft 1 starr verbunden sind. Eine als Vernietung ausgebildete unlösbare Verbindung 12 hält die Schleppzinken an ihren aneinander anliegenden Kröpfschenkel 10 fest zusammen. Zur Aufnahme des Werkzeugkopfes 4 am Schaftende 2 des Werkzeugschaftes 1 weist dieser ein die Schleppzinken 5 basisseitig umschließenden Futterkörper 13 auf. Der Futterkörper 13 weist die Einspannhälse der Schleppzinken 5 im Hohlprofil des Werkzeugschaftes formschlüssig aufnehmende Klemmbacken 14 auf, die zusammen mit den Einspannhälsen 11 und dem Werkzeugschaft 1 eine Steckverbindung ausbilden, deren Teile mittels zweier Nieten 15,16 gegen ein Auseinanderziehen gesichert sind. Der die über den die Schleppzinken 5 basisseitig umschließenden Teil 17 des Futterkörpers 13 sind die Klemmbacken 14 einstückig miteinander verbunden. Der Werkzeugschaft 1 weist ein Griffteil 18 mit einem zwischen seiner Grifffläche 19 und dem Werkzeugkopf 4 ausgebildeten Fingerschutz 20 auf. die Griffinnenseitig an dem Fingerschutz ausgebildete Griffmulde 21 weist einen Öffnungswinkel von 80° auf. Der Werkzeugschaft 1 weist zwei gerade Schaftabschnitte 22,23 auf, die über einen einfach gekrümmten Schaftabschnitt 24 miteinander verbunden sind.

## Patentansprüche

1. Vorrichtung zum manuellen Rücken von Baumstämmen, mit einem Werkzeugschaft und wenigstens einem an einem der Schaftenden des Werkzeugschaftes gehaltenen Werkzeugkopf,
**dadurch gekennzeichnet,**
**dass** der Werkzeugkopf (4) wenigstens zwei, in Längsrichtung des Werkzeugschaftes (1) nebeneinander angeordnete Schleppzinken (5) aufweist, und
**dass** jede Schleppzinke (5) eine krallenartig ausgeformte Zinkenspitze (6) mit wenigstens einer auf ihrer Konkavseite (7) ausgebildeten Zahnung (8) aufweist.

2. Vorrichtung nach Anspruch 1, **dadurch gekennzeichnet, dass** die Schleppzinken (5) zueinander gegensinnig ausgebildete Abkröpfungen (9) aufweisen, wobei die einander zugekehrten Kröpfschenkel (10) aneinander anliegen.

3. Vorrichtung nach Anspruch 1 oder 2, **dadurch gekennzeichnet, dass** die Schleppzinken (5) an ihren aneinander anliegenden Kröpfschenkeln (10) über wenigstens eine starre Verbindung (12) zusammengehalten sind.

4. Vorrichtung nach einem der Ansprüche 1 bis 3, **dadurch gekennzeichnet, dass** der Werkzeugschaft (1) wenigstens einen die Schleppzinken (5) basisseitig umschließenden Futterkörper (13) aufweist.

5. Vorrichtung nach einem der Ansprüche 1 bis 4, **dadurch gekennzeichnet, dass** der Werkzeugschaft (1) ein Griffteil (18) mit wenigstens einem zwischen seiner Grifffläche (19) und dem Werkzeugkopf (4) ausgebildeten Fingerschutz (20) aufweist.

6. Vorrichtung nach Anspruch 5, **dadurch gekennzeichnet, dass** der Werkzeugschaft (1) als Schiebeführung für das Griffteil (18) ausgebildet ist, und dass der Schiebeführung wenigstens ein Feststellmechanismus zugeordnet ist.

7. Vorrichtung nach einem der Ansprüche 1 bis 6, **dadurch gekennzeichnet, dass** der Werkzeugschaft (1) wenigstens zwei gerade Schaftabschnitte (22,23) aufweist, und dass die geraden Schaftabschnitte (22,23) über einen wenigstens einfach gekrümmten Schaftabschnitt (24) miteinander verbunden sind.

8. Vorrichtung nach Anspruch 6 oder 7, **dadurch gekennzeichnet, dass** der Werkzeugschaft (1) wenigstens ein an seinem das Griffteil (18) tragenden Schaftende (3) ein Anreißmesser aufweist, und dass dem Anreißmesser eine im Griffteil (18) ausgebildete Messerscheide zugeordnet ist.

## Claims

1. A device for manually skidding tree logs, comprising a tool shank and at least one tool head held on one of the shank ends of the tool shank,
**characterised in that**
the tool head (4) comprises at least two drag tines (5), arranged side by side in the longitudinal direction of the tool shank (1), and
**in that** each drag tine (5) comprises a claw-shaped tine tip (6) with at least one serrated region (8) formed on its concave side (7).

2. The device according to claim 1, **characterised in that** the drag tines (5) comprise offsets (9) that extend in contrary directions, wherein the facing offset limbs (10) rest against each other.

3. The device according to claim 1 or 2, **characterised in that** the drag tines (5) are held together, on their offset limbs (10) that rest against each other, by way of at least one rigid connection (12).

4. The device according to any one of claims 1 to 3, **characterised in that** the tool shank (1) comprises at least one casing body (13) that on the base encloses the drag tines (5).

5. The device according to any one of claims 1 to 4, **characterised in that** the tool shank (1) comprises a handle (18) with at least one finger guard (20) formed between its handle surface (19) and the tool head (4).

6. The device according to claim 5, **characterised in that** the tool shank (1) is designed as a slide guide for the handle (18), and **in that** at least one locking mechanism is associated with the slide guide.

7. The device according to any one of claims 1 to 6, **characterised in that** the tool shank (1) comprises at least two straight shank portions (22, 23), and **in that** the straight shank portions (22, 23) are interconnected by way of a shank portion (24) that is at least singly curved.

8. The device according to claim 6 or 7, **characterised in that** at its shank end (3) bearing the handle (18) the tool shank (1) comprises at least one marking knife, and **in that** a knife sheath formed in the handle (18) is associated with the marking knife.

## Revendications

1. Dispositif pour le débardage manuel de troncs d'arbre, comprenant un arbre d'outil et au moins une tête d'outil maintenue sur une des extrémités d'arbre de l'arbre d'outil,
**caractérisé en ce que**
la tête d'outil (4) présente au moins deux dents de tractage (5) disposées l'une à côté de l'autre dans le sens longitudinal de l'arbre d'outil (1), et
que chaque dent de tractage (5) présente une pointe de dent (6) en forme de griffe comprenant au moins une denture (8) formée sur son côté concave (7).

2. Dispositif selon la revendication 1, **caractérisé en ce que** les dents de tractage (5) présentent des coudes (9) formés à contre-sens les uns par rapport aux autres, sachant que les branches de coude (10) rentrées l'une dans l'autre reposent l'une sur l'autre.

3. Dispositif selon la revendication 1 ou 2, **caractérisé en ce que** les dents de tractage (5) sont maintenues ensemble sur leurs branches de coude (10) reposant l'une sur l'autre par au moins une liaison fixe (12).

4. Dispositif selon l'une des revendications 1 à 3, **caractérisé en ce que** l'arbre d'outil (1) présente au moins un corps de garniture (13) entourant la base des dents de tractage (5).

5. Dispositif selon l'une des revendications 1 à 4, **caractérisé en ce que** l'arbre d'outil (1) présente une partie de préhension (18) comprenant au moins un protège-doigts (20) formé entre sa surface de préhension (19) et la tête d'outil (4).

6. Dispositif selon la revendication 5, **caractérisé en ce que** l'arbre d'outil (1) est formé en tant que guide à coulisse pour la pièce de préhension (18), et que le guide à coulisse est attribué à au moins un mécanisme de fixation.

7. Dispositif selon l'une des revendications 1 à 6, **caractérisé en ce que** l'arbre d'outil (1) présente au moins deux tronçons d'arbre droits (22, 23), et que les tronçons d'arbre droits (22, 23) sont reliés entre eux par un tronçon d'arbre (24) ayant au moins une courbe.

8. Dispositif selon la revendication 6 ou 7, **caractérisé en ce que** l'arbre d'outil (1) présente au moins une lame à tracer sur son extrémité d'arbre (3) portant la partie de préhension (18) et qu'une gaine de lame formée dans la partie de préhension (18) est attribuée à la lame à tracer.
